# EUROPEAN PATENT APPLICATION

(11) **EP 1 811 487 A1**
(43) Date of publication of application: **25.07.2007**
(21) Application number: 06077282.9
(22) Date of filing: 21.12.2006
(51) Int. Cl.: G09G 3/20

(54) **Image processing apparatus capable of communicating with an image source and an image processing method**

(30) Priority: 23.01.2006 KR 20060006686
(71) Applicant: Samsung Electronics Co., Ltd., Suwon-si, Gyeonggi-Do (KR)
(72) Inventor: Kim, Jin-hun, Seoul (KR)
(74) Representative: D'Halleweyn, Nele Veerle Trees Gertrudis

(57) **Abstract**

An image processing apparatus capable of performing communication with an image source, and an image processing method thereof are provided. The apparatus includes a main communication part to receive additional data and an image signal from a signal source, the additional data representing additional image information necessary for implementing an image by numerical values, an image processor to implement the image on the basis of the additional data and the image signal received through the main communication part, a display to display the implemented image, and a main controller to control the image to be implemented and displayed on the basis of the additional data. Accordingly, the additional data, which represents the horizontal/vertical sync by numerical values, is transmitted through a DDC line, and an actual image is implemented using the transmitted additional data so that an image with reduced signal distortion can be provided.

## Description

### BACKGROUND OF THE INVENTION

### Field of the Invention:

The present invention relates to an image processing apparatus having a function of communication with an image source, and a method thereof. More particularly, the present invention relates to an image processing apparatus capable of performing communication with an image source that transmits additional data and a method thereof.

### Description of the Related Art

Generally, a device, which transmits additional image information using analogue scheme, transmits the additional image information through D-sub connector and cable with 15 pins to a monitor. The additional image information consists of RGB image signal, horizontal sync, vertical sync and sync ground signal, and is transmitted through a part of 15 pins of the D-sub connector to the monitor. Additionally, a part of 15 pins is used for transmitting display data channel (DDC) data, DDC clock signal and DDC ground signal.

However, if the additional image information is transmitted using the conventional analogue scheme, signal is frequently distorted due to the feature of cable using 15 pins or exterior noise. Accordingly, an image is not accurately displayed on the monitor, nor clearness and resolution may be deteriorated.

### SUMMARY OF THE INVENTION

Accordingly, aspects of the present invention are to solve at least the above problem and/or advantages and to provide at least the advantages described below. Therefore, an aspect of the present invention is to provide an image processing apparatus capable of performing a communication with an image source that can display an actual image using additional data, which represents a horizontal/vertical sync transmitted through display data channel (DDC) line by numerical values, so that a signal distortion can be solved which occurs due to a cable feature or an exterior noise generated when data is transmitted through connector and a cable with 15 pins, and a method thereof.

To achieve the above-described aspect, there is provided an image processing apparatus capable of performing communication with an image source, the apparatus including a main communication part to receive additional data and an image signal from a signal source, the additional data representing additional image information necessary for displaying an image by numerical values, an image processor to process the image on the basis of the additional data and the image signal received through the main communication part, a display to display the image, and a main controller to control the image displayed on the basis of the additional data.

The signal source comprises a first converter to convert a digital image signal into an analogue image signal, an additional information analyzer to analyze the additional image information related to the digital image signal and generate the additional data, an intermediate path provider to provide an intermediate path to transmit the generated additional data through a first line, and a sub communication part to transmit the analogue image signal through a second line, the additional data, which is output by the intermediate path provider, through the first line to the main communication part.

The additional information analyzer generates the additional data, which represents a time period, a pulse width, and a polarity of a horizontal sync and a vertical sync, respectively, by numerical values, and provide the additional data to the intermediate path provider.

The additional information analyzer counts the number of a plurality of dot clock signals of the horizontal sync to provide the counted number as the additional data to the intermediate path provider.

The additional information analyzer represents a start location of the digital image signal by numerical values to determine an effective interval of the digital image signal.

The image processor comprises an additional information restorer to restore the additional image information on the basis of the additional data received through the main communication part, a second converter to convert an analogue image signal received through the main communication part into a digital image signal, and a scaler to scale the converted digital image signal to a signal suitable for a predetermined resolution to provide the signal to the display, wherein the main controller controls the second converter to convert the analogue image signal into the digital image signal on the basis of the generated additional image information.

The additional information restorer may restore a horizontal sync and a vertical sync of the digital image signal, a plurality of dot clock signals of the horizontal sync, and a data enable signal on the basis of the additional data to restore the additional image information.

The main controller controls the second converter to sample the analogue image signal using the restored dot clock signal.

The main controller controls the second converter to synchronize the analogue signal with the restored horizontal sync and vertical sync using the restored data enable signal and simultaneously convert the analogue image signal into the digital image signal.

The additional data comprises a time period, a pulse width, and a polarity of the horizontal sync and the vertical sync, respectively, the number of dot clock signal of the horizontal sync, and a start location of the digital image signal to restore the data enable signal.

The main controller controls the image processor to determine an image mode on the basis of the restored horizontal sync and vertical sync and perform a signal process according to the determined image mode.

The additional information restorer and the main controller may be implemented as a single chip, the first line comprises a display data channel (DDC) line, and the second line comprises an image line.

The analogue image signal comprises a RGB image signal, and the signal source is installed in an external device according to a DDC standard.

To achieve the above-described aspect, there is provided an image processing method using a communication with an image source, including operations of (a) receiving additional data and an image signal from a signal source, the additional data representing additional image information necessary for displaying an image by numerical values, (b) implementing the image on the basis of the received additional data and image signal, and (c) displaying the image.

The operation (a) comprises operations of (a1) converting a digital image signal into an analogue image signal, (a2) analyzing the additional image information related to the digital image signal to generate the additional data, and (a3) transmitting the generated additional data through a first line, and transmitting the analogue image signal through a second line.

The operation (a2) generates the additional data, which represents a time period, a pulse width, and a polarity of a horizontal sync and the vertical sync, respectively, by numerical values. The operation (a2) counts the number of a plurality of dot clock signals of the horizontal sync to generate the counted number as the additional data.

The operation (a2) represents a start location of the digital image signal by numerical values to determine an effective interval of the digital image signal and generates the numerical start location as the additional data.

The operation (b) may include (b1) restoring the additional image information on the basis of the received additional data, (b2) converting the received image signal into a digital image signal on the basis of the restored additional image information, and (b3) scaling and displaying the converted digital image signal to a signal suitable for a predetermined resolution.

The operation (b1) restores a horizontal sync and a vertical sync of the digital image signal, a plurality of dot clock signals of the horizontal sync, and a data enable signal on the basis of the additional data to restore the additional image information.

The operation (b2) samples the analogue image signal using the restored dot clock signal, and synchronizes the analogue signal with the restored horizontal sync and vertical sync using the restored data enable signal to simultaneously convert the analogue image signal into the digital image signal.

The additional data comprises a time period, a pulse width, and a polarity of the horizontal sync and the vertical sync, respectively, the number of dot clock signal of the horizontal sync, and a start location of the digital image signal to restore the data enable signal.

### BRIEF DESCRIPTION OF THE DRAWINGS

The above aspects and features of the present invention will be more apparent by describing certain embodiments of the present invention with reference to the accompanying drawings, in which:
FIG. 1 is a schematic block diagram illustrating an image processing apparatus capable of performing a communication with an image source and an exterior device according to an exemplary embodiment of the present invention;
FIG. 2 is a detailed block diagram illustrating the graphic card depicted in FIG. 1;
FIG. 3 is a view for explaining time difference information calculated from the additional information analyzer of FIG. 2;
FIG. 4 is a schematic block diagram illustrating the image processing apparatus of FIG. 1;
FIG. 5 is a schematic block diagram of an image processing apparatus according to a second exemplary embodiment of the present invention;
FIG. 6 is a flowchart for schematically explaining operations of the graphic card illustrated in FIG. 1; and
FIG. 7 is a flowchart for schematically explaining an image processing method of the image processing apparatus of FIG. 1.

### DETAILED DESCRIPTION OF THE EXEMPLARY EMBODIMENTS

Exemplary embodiments of the present invention will be described in detail with reference to the annexed drawings. In the drawings, the same elements are denoted by the same reference numerals throughout the drawings. In the following description, detailed descriptions of known functions and configurations incorporated herein have been omitted for conciseness and clarity.

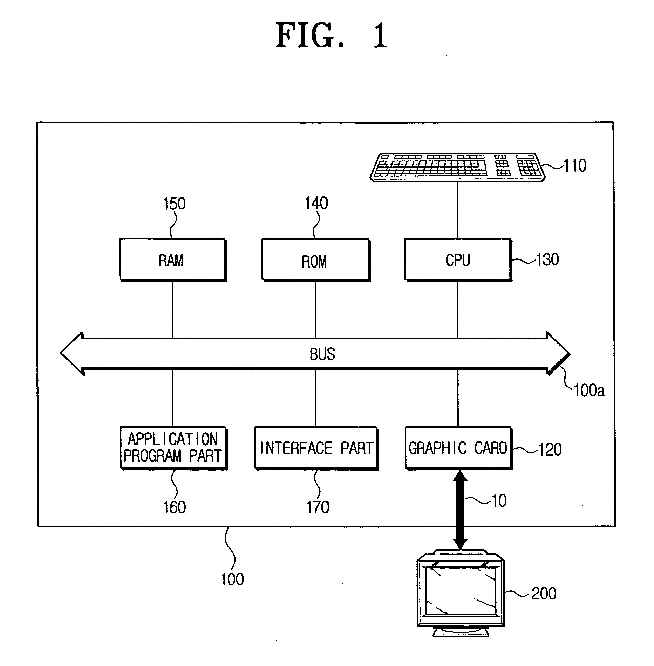

FIG. 1 is a schematic block diagram of an image processing apparatus capable of performing a communication with an image source and an external device according to an exemplary embodiment of the present invention.

An image processing apparatus 200 capable of performing communication with an image source according to an exemplary embodiment of the present invention receives additional data, which represents additional image information by numerical values, and an image signal from an external device 100 to restore the data and signal into a viewable signal and display it. The additional data is information representing a plurality of additional information such as horizontal sync and vertical sync by numerical values, and is formed in a signal source. The generated additional data and image signal are transmitted through predetermined communication standard to the image processing apparatus 200.

In the present embodiment, a graphic module is exemplified as the signal source, and a display data channel (DDC) standard is exemplified as the predetermined communication standard. However, this should not be considered as limiting. Any signal source and communication standard may be employed if the signal source can generate additional image information, which will be explained later, and the communication standard can transmit the generated additional image information.

Referring to FIG. 1, the external device 100 performs data communication according to the DDC standard, and is connected through a cable 10 to the image processing apparatus 200 that processes an image signal and displays it. The image processing apparatus 200 capable of performing communication with an image source according to an exemplary embodiment of the present invention receives additional data through a DDC line from a graphic card 120 and displays an image on the basis of the received additional data. Hereafter, a computer will be exemplified as the external device 100, and a monitor will be exemplified as the image processing apparatus 200.

First, the external device 100 comprises a user input part 110, a graphic card 120, a central processing unit (CPU) 130, a read only memory (ROM) 140, a random access memory (RAM) 150, an application program part 160, and an interface part 170. A bus 100a is a path to transmit data between each part.

The user input part 110 is a user interface to request functions provided by the external device 100, and includes a keyboard, a mouse, and a touch panel. In the present embodiment, if the image processing apparatus 200 has no separate user input part, the user input part 110 requests the functions provided by the image processing apparatus 200.

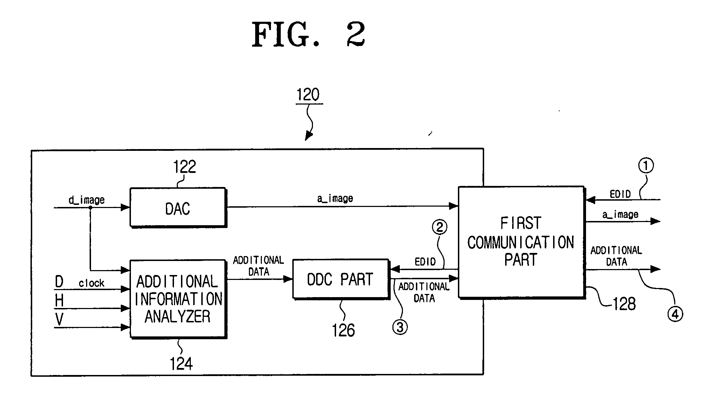

The graphic card 120 transmits an analogue image signal through an image line to the image processing apparatus 200, and transmits additional data, which represents the additional image information necessary for implementing an image by numerical values, through the DDC line to the image processing apparatus 200. The graphic card 120 will be elucidated later with reference to FIG. 2.

The CPU 130 controls general operations of the external device 100 using various control programs that are stored therein. In the present embodiment, the CPU 130 controls the graphic card 120 to transmit the image signal and the additional data, which are provided from the graphic card 120, to the image processing apparatus 200.

The ROM 140, which is a non-volatile memory device, stores various control programs necessary for implementing the functions of the external device 100.

The RAM 150, which is a volatile memory device, stores thereto a program, which is loaded by the ROM 140 and will be executed by the CPU 130, or stores thereto the data processed by the CPU 130.

The application program part 160 stores thereto a plurality of application programs.

FIG. 2 is a block diagram illustrating in more detail the graphic card of FIG.
1.

Referring to FIGS. 1 and 2, the graphic card 120 according to an exemplary embodiment of the present invention comprises a digital/analog converter (hereafter, referred as DAC) 122, an additional information analyzer 124, a DDC part 126, and a first communication part 128. Additionally, the lines ① ~ ④ show the DDC lines.

The DAC 122 applied to the first converter converts a digital image signal d_image, which will be implemented as an image, into an analogue image signal a_image. The digital image signal d_image is generated in an external device 100 by itself, or transmitted through a device such as an external tuner (not shown).

The additional information analyzer 124 receives and analyzes the additional image information to generate additional data in the form of numerical values. The additional image information comprises the digital image signal d_image, a horizontal sync H, a vertical signal V, and a dot clock signal D clock related to the digital image signal d_image. The horizontal sync H consists of a plurality of dot clock signals D clock.

In more detail, the additional information analyzer 124 analyzes the horizontal sync H to represent a time period T, a pulse width W, and polarity (positive or negative) of the horizontal sync H by numerical values, and analyzes the vertical sync V to represent a time period, a pulse width, and a polarity of the vertical sync V by numerical values.

The additional information analyzer 124 counts the number of the plurality of dot clock signals D clock of the horizontal sync H. The dot clock signal is to synchronize a location of each pixel.

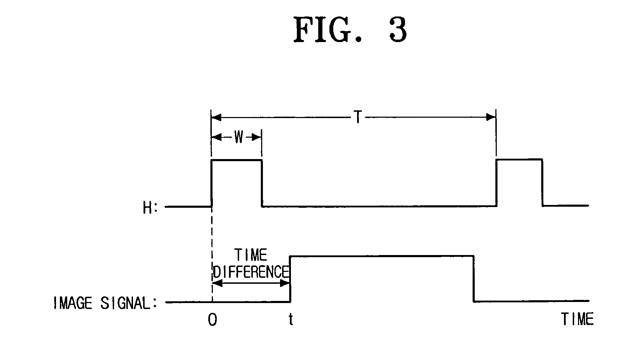

As shown in FIG. 3, the additional information analyzer 124 represents a start location t or an end location of the digital image signal d_image by numerical values to determine an effective data interval of the digital image signal d_image. The start location t refers to time difference information between the digital image signal d_image and the horizontal sync H.

The additional information analyzer 124 determines whether or not the timing is changed, and generates the additional data on the basis of the predetermined timing. Here, the timing refers to resolution and frequency predetermined by a user or by a designer.

As the external device 100 is connected to the image processing apparatus 200 and power is turned on, the DDC part 126 recognizes the status information of the image processing apparatus 200 from extended display identification data (EDID) provided from the image processing apparatus 200. The EDID refers to basic information such as a manufacturer of the image processing apparatus 200, resolution displayable on a display 230, and horizontal/vertical frequency, and enables plug and play (P & P) function.

In the present embodiment, if the DDC line is idle, the DDC part 126 transmits the additional data generated by the additional information analyzer 124 through the DDC line to a first communication part 128. In detail, the DDC part 126 provides an intermediate path to transmit the additional data.

Preferably, the DDC part 126 may employ a standard to support the bidirectional transmission scheme, and examples thereof are DDC 2B, and DDC 2Bi. The DDC 2Bi provides functions to control various functions provided by the image processing apparatus 200 even when the image processing apparatus 200 has no user interface such as a keyboard.

The first communication part 128 is a connector connected to a cable that transmits an analogue signal to the image processing apparatus 200, and it has a plurality of pins. The first communication part 128 provides EDID information received through the DDC line from the image processing apparatus 200, to the DDC part 126.

The first communication part 128 transmits the analogue image signal a_image through an image line to the image processing apparatus 200, and the additional data through the DDC line to the image processing apparatus 200. In other words, the first communication part 128 has a pin to transmit the analogue image signal a_image, a pin to transmit the additional data, and ground pins for each signal.

For example, the analogue signal a_image is RGB signal, the first communication part 128 has three pins for each R, G, B, one pin for the additional data, one pin for the clock signal of the additional data, and five ground pines for each pin. Such number of pins is the minimum number of pins provided in the first communication part 128 to reduce the distortion generated when the analogue image signal a_image is transmitted. It is noted that various different connectors can be utilized in the present invention such as 15 pin RGB analog cable , DVI-I cable having the capability to transmit analog video signal as well as digital video signal, or other connectors that may be capable of transmitting analog signal.

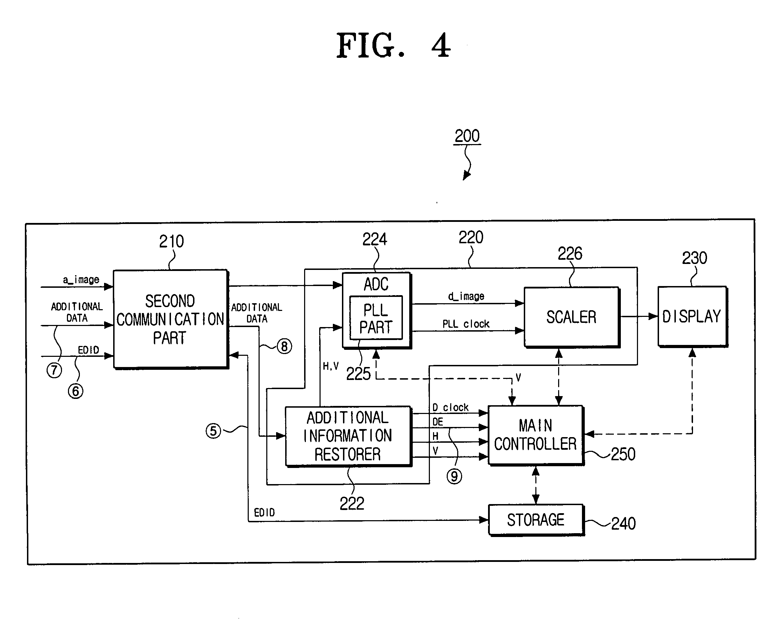

FIG. 4 is a schematic block diagram of the image processing apparatus illustrated in FIG. 1.

Referring to FIGS. 1 through 4, the image processing apparatus 200 according to a first exemplary embodiment of the present invention comprises a second communication part 210, an image processor 220, a display 230, a storage 240, and a main controller 250. Lines ⑤~⑨ show DDC lines.

If power is turned on, the second communication part 210, which is applied to a main communication part, transmits the EDID information stored in the storage 240, to the graphic card 120. Additionally, the second communication part 210 provides the analogue image signal a_image received from the graphic card 120, to the analogue digital converter (hereafter, referred to ADC) 224, and the additional data to an additional information restorer 222.

The image processor 220 processes the image on the basis of the provided analogue signal a_image and the additional data. To this end, the image processor 220 has the additional information restorer 222, the ADC 224, and a scaler 226.

The additional information restorer 222 restores the additional image information used in the graphic card 120 on the basis of the additional data provided from the second communication part 210. The provided additional data comprises the time period T, the pulse width W, and the polarity (positive or negative) of the horizontal sync H and the vertical sync V, the number of dot clock signal D clock, and the start location t of the digital image signal d_image.

Accordingly, the additional information restorer 222 analyzes the additional data to restore the additional image information, that is, the horizontal sync H, the vertical sync V, the dot clock signal D clock, and the data enable signal DE. For example, the horizontal sync H is restored as illustrated in FIG. 3.

The additional information restorer 222 provides the restored additional image information to the main controller 250, and especially, provides the horizontal sync H and the vertical sync V also to the ADC 224.

The ADC 224, which is applied to the second converter, comprises a phase locked loop (PLL) part 225 to generate a sampling clock signal. Therefore, when converting the analogue image signal a_image into the digital image signal d_image, the ADC 224 samples the analogue signal a_image according to the dot clock signal D clock and the sampling clock signal PLL clock to generate the digital image signal d_image. The ADC 224 synchronizes the horizontal sync H and the vertical sync V with the digital image signal d_image using the data enable signal DE.

The scaler 226 scales the digital image signal d_image to a size suitable for the predetermined resolution using the sampling clock signal PLL clock provided from the ADC 224. At this time, the scaler 226 detects the effective data interval of the digital image signal d_image using the data enable signal DE for the scaling.

The display 230 displays the digital image signal d_image output from the scaler 226. The display 230 may be implemented as various panels such as a liquid display panel, a cathode ray tube panel, a plasma display panel and other panels that are in use.

The storage 240 stores thereto the EDID information, which is the status information of the display 230.

The main controller 250 controls the second communication part 210, the image processor 220, the display 230, and the storage 240 to display an actual image on the basis of the additional data received from the graphic card 120.

In more detail, as power is turned on, the main controller 250 reads the EDID information of the storage 240 and then controls the second communication 210 to transmit the read EDID information to the graphic card 120.

The main controller 250 controls the image processor 220 to process the additional data and analogue image signal a_image, which are received from the graphic card 120, as signal to restore the additional image information and implement an actual image. At this time, the main controller 250 determines if the additional data and analogue image signal a_image are effective data through checksum. If they are determined to be effective data, the main controller 250 controls the second communication part 210 to transmit an success ack to the graphic card 120. If they are determined to be ineffective data, the main controller 250 controls the second communication part 210 to transmit an error ack to the graphic card 120. If the error ack is received, the graphic card 120 processes the additional image information and image signal to be re-transmitted.

In detail, the main controller 250 controls the ADC 224 to generate the sampling clock signal PLL clock on the basis of the additional image information H, V, D clock, DE restored by the additional information restorer 222, and generates the digital image signal d_image according to the dot clock signal D clock and the sampling clock signal PLL clock. At this time, the main controller 250 controls the ADC 224 to synchronize the digital image signal d_image using the data enable signal DE.

The main controller 250 controls the scaler 226 to detect and scale the effective data interval of the digital image signal d_image from the data enable signal DE, and controls the display 230 to display the scaled image.

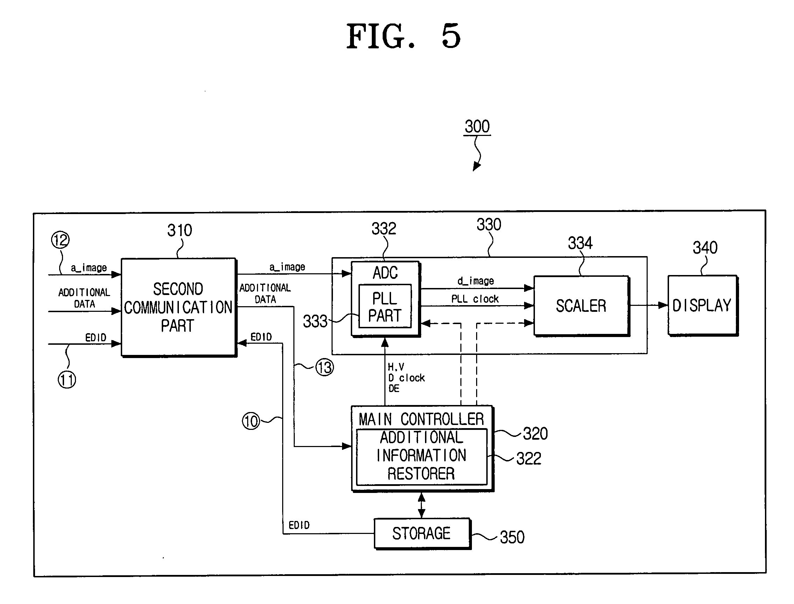

FIG. 5 is a schematic block diagram illustrating the image processing apparatus according to a second exemplary embodiment of the present invention. FIG. 5 is a view explaining the operations of the additional information restorer 222 and the main controller 250 when the additional information restorer 222 and the main controller 250 illustrated in FIG. 4 are implemented as a single chip.

Referring to FIGS. 1 through 3, and 5, the image processing apparatus 300 comprises a second communication part 310, a main controller 320, an image processor 330, a display 340, and a storage 350. Additionally, lines ⑩~⑬ show DDC lines.

The image processing apparatus 300 of FIG. 5 operates similarly to the image processing apparatus 200 of FIG. 4, and therefore, the detailed description thereof will be omitted for the sake for brevity. The characteristic operations according to the second exemplary embodiment will be mainly explained.

The second communication part 310, which is applied to a main communication part, transmits the EDID information stored in the storage 350 to the graphic card 120, and provides the analogue image signal a_image received from the graphic card 120 to the ADC 332, and the additional data to the main controller 320.

If power is turned on, the main controller 320 reads the EDID information of the storage 350 and controls the second communication part 310 to transmit the EDID information to the graphic card 120.

The main controller 320 controls the image processor 330 to implement an actual image on the basis of the provided additional data. To this end, the main controller 320 has the additional information restorer 322. The additional information restorer 322 and the main controller 320 are implemented as a single chip.

The additional information restorer 322 restores the additional image information used in the graphic card 120 on the basis of the additional data received from the second communication part 310. The restored additional image information includes the horizontal sync H, the vertical sync V, the dot clock signal D clock, and the data enable signal DE as shown in FIG. 3.

The main controller 320 controls the image processor 330 to be operated on the basis of the restored additional image information, and provides the horizontal sync H and the vertical sync V also to the ADC 332.

The image processor 330 has the ADC 332 and the scaler 334, and implements an image on the basis of the provided analogue image signal a_image and additional data.

The display 340 displays the digital image signal d_image output from the scaler 334.

It is noted that various different combinations of the elements in the present invention can be implemented as a single chip without departing from the scope of the present invention.

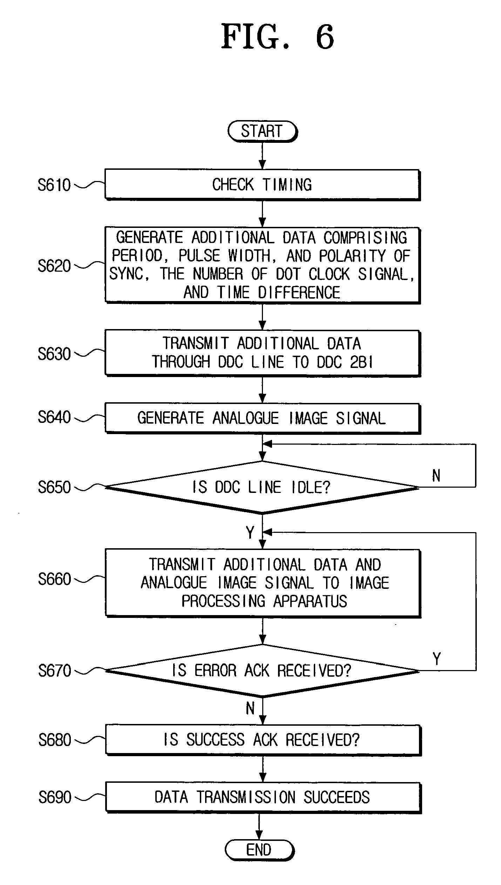

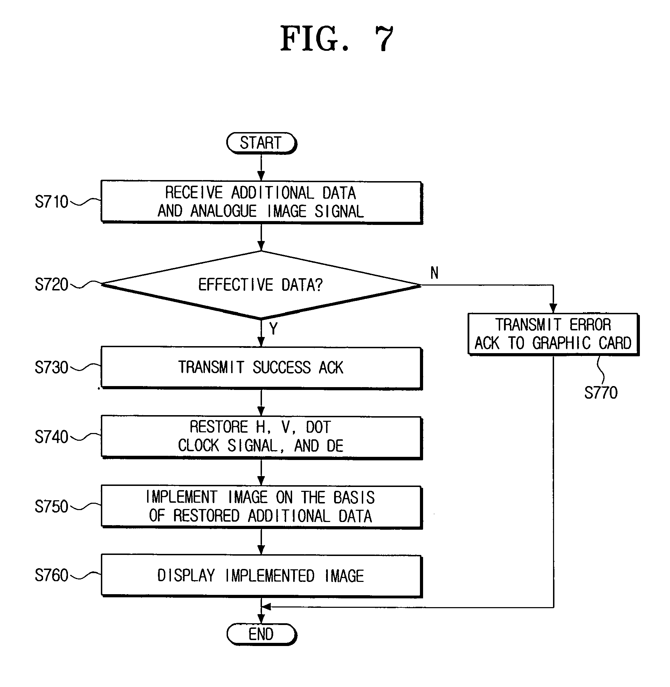

FIG. 6 is a flowchart for schematically explaining operations of the graphic card illustrated in FIG. 1, and FIG. 7 is a flowchart for schematically explaining an image processing method of the image processing apparatus illustrated in FIG. 1.

Referring to FIGS. 1 through 4, FIG. 6 and 7, as power is turned on and the external device 100 is booted, the DDC part 126 recognizes the status of the image processing apparatus 200 on the basis of the EDID information received from the image processing apparatus 200.

The additional information analyzer 124 checks predetermined timing, that is, predetermined resolution or frequency (S610).

The additional information analyzer 124 represents the digital image signal d_image, the horizontal sync H, the vertical sync V, and the dot clock signal D clock, which are input according to the checked timing, by numerical values to generate the additional data (S620). The additional data includes the time period T, the pulse width W, and the polarity (positive or negative) of the horizontal sync H and the vertical sync V, the number of dot clock signal D clock, and the start location t of the digital image signal d_image.

After the operation S620, the additional information analyzer 124 provides the generated additional data through the DDC line to the DDC part 126 (S630).

The DAC 122 converts the digital image signal d_image into the analogue image signal a_image to provide it to the first communication part 128 (S640).

After the operations S630 and S640, the DDC part 126 checks whether or not the DDC line is idle (S650). If the DDC line is idle, the DDC part 126 outputs the additional data to the first communication part 128, and the first communication part 128 transmits the additional data through the DDC line, and the analogue image signal a_image through an image line, to the image processing apparatus 200 (S660).

As predetermined time passes, if an error ack is received from the image processing apparatus 200 (S670), the graphic card 120 performs the operation S660 again to process the additional data and the analogue image signal to be re-transmitted.

Conversely, if a success ack is received from the image processing apparatus 200 after the operation S670, the graphic card 120 determines that the additional data and the image signal are successfully transmitted (S680, S690).

The second communication part 210 of the image processing apparatus 200 receives the additional data and analogue image signal a_image to transmit the additional data through the DDC line to the additional information restorer 222, and the analogue image signal through the image line to the ADC 224 (S710).

In the operation S710, the main controller 250 determines if the received additional data and analogue image signal a_image are effective through checksum (S720).

If the received additional data and analogue image signal a_image are determined to be effective, the main controller 250 controls the second communication part 210 to transmit the success ack to the graphic card 120 (S730).

The additional information analyzer 124 restores the additional image information used in the graphic card 120 on the basis of the additional data (S740). The restored additional image information includes the horizontal sync H, the vertical sync V, the dot clock signal D clock and the data enable signal DE.

In the operation S740, the main controller 250 controls the image processor 220 to implement an actual image on the basis of the restored additional image information (S750), and controls the display 230 to display the implemented image (S760).

Conversely, if the data is determined to be ineffective in the operation S720, the main controller 250 controls the second communication part 210 to transmit the error ack to the graphic card 120 (S770).

According to embodiments of the present invention, the graphic card 120 does not individually transmit the horizontal sync H, the vertical sync V, the dot clock signal D clock, but represents the horizontal sync H, the vertical sync V, the dot clock signal D clock by numerical values to transmit to the image processing apparatus 200. Accordingly, the first communication part 128, the second communication part 210, and the cable 10 do not require lines to transmit each of the horizontal sync H, the vertical sync V, and the dot clock signal D clock, but can transmit the additional data, which is represented by numerical values, through a single DDC line. The image processing apparatus 200 restores the horizontal sync H, the vertical sync V, and the dot clock signal D clock using the data, which is less influenced by noise or less distorted. Therefore, an improved image can be provided.

According to the image processing apparatus capable of performing communication with an image source, and method thereof consistent with embodiments of the present invention, the graphic card transmits the data through the DDC line among connector and cable with 15 pins or less, and the image processing apparatus generates the horizontal/vertical sync to implement an actual image. Accordingly, the signal distortion can be reduced which is generated due to the D-sub cable feature or the exterior noise.

Particularly, the graphic card according to embodiments of the present invention transmits the number of the dot clock signal of the horizontal sync as the additional data so that the image processing apparatus can display more accurate and clearer image using the received number of the dot clock signal.

While the invention has been shown and described with reference to certain embodiments thereof, it will be understood by those skilled in the art that various changes in form and details may be made therein without departing from the spirit and scope of the invention as defined by the appended claims.

## Claims

1. An image processing apparatus capable of performing communication with an image source, the apparatus comprising:
a main communication part to receive additional data and an image signal from a signal source, the additional data representing additional image information necessary for implementing an image by numerical values;
an image processor to implement the image on the basis of the additional data and the image signal received through the main communication part;
a display to display the implemented image; and
a main controller to control the image to be implemented and displayed on the basis of the additional data.

2. The apparatus as claimed in claim 1, wherein the signal source comprises:
a first converter to convert a digital image signal into an analogue image signal;
an additional information analyzer to analyze the additional image information related to the digital image signal and generate the additional data;
an intermediate path provider to provide an intermediate path to transmit the generated additional data through a first line; and
a sub communication part to transmit the analogue image signal through a second line, the additional data, which is output by the intermediate path provider, through the first line to the main communication part.

3. The apparatus as claimed in claim 2, wherein the additional information analyzer generates the additional data, which represents a time period, a pulse width, and a polarity of a horizontal sync and a vertical sync, respectively, by numerical values and provide the additional data to the intermediate path provider.

4. The apparatus as claimed in claim 3, wherein the additional information analyzer counts the number of a plurality of dot clock signals of the horizontal sync to provide the counted number as the additional data to the intermediate path provider.

5. The apparatus as claimed in claim 3, wherein the additional information analyzer represents a start location of the digital image signal by numerical values to determine an effective interval of the digital image signal.

6. The apparatus as claimed in claim 1, wherein the image processor comprises:
an additional information restorer to restore the additional image information on the basis of the additional data received through the main communication part;
a second converter to convert an analogue image signal received through the main communication part into a digital image signal; and
a scaler to scale the converted digital image signal to a signal suitable for a predetermined resolution to provide the signal to the display;
wherein the main controller controls the second converter to convert the analogue image signal into the digital image signal on the basis of the generated additional image information.

7. The apparatus as claimed in claim 6, wherein the additional information restorer restores a horizontal sync and a vertical sync of the digital image signal, a plurality of dot clock signals of the horizontal sync, and a data enable signal on the basis of the additional data to restore the additional image information.

8. The apparatus as claimed in claim 6, wherein the main controller controls the second converter to sample the analogue image signal using the restored dot clock signal.

9. The apparatus as claimed in claim 7, wherein the main controller controls the second converter to synchronize the analogue signal with the restored horizontal sync and vertical sync using the restored data enable signal, and simultaneously convert the analogue image signal into the digital image signal.

10. The apparatus as claimed in claim 7, wherein the additional data comprises a time period, a pulse width, and a polarity of the horizontal sync and the vertical sync, respectively, the number of dot clock signal of the horizontal sync, and a start location of the digital image signal to restore the data enable signal.

11. The apparatus as claimed in claim 7, wherein the main controller controls the image processor to determine an image mode on the basis of the restored horizontal sync and vertical sync and perform a signal process according to the determined image mode.

12. The apparatus as claimed in claim 6, wherein the additional information restorer and the main controller may be implemented as a single chip.

13. The apparatus as claimed in claim 2, wherein the first line comprises a display data channel (DDC) line, and the second line comprises an image line.

14. The apparatus as claimed in claim 2, wherein the analogue image signal comprises a RGB image singal, and the signal source is installed in an external device according to a DDC standard.

15. The apparatus as claimed in claim 1, wherein the signal source comprises a graphic module to represent the additional image signal on a digital image signal by numerical values and convert the digital image signal into an analogue image signal for outputting.

16. An image processing method using a communication with an image source, comprising:
(a) receiving additional data and an image signal from a signal source, the additional data representing additional image information necessary for implementing an image by numerical values;
(b) implementing the image on the basis of the received additional data and image signal; and
(c) displaying the implemented image.

17. The method as claimed in claim 16, wherein the operation (a) comprises:
(a1) converting a digital image signal into an analogue image signal;
(a2) analyzing the additional image information related to the digital image signal to generate the additional data; and
(a3) transmitting the generated additional data through a first line, and transmitting the analogue image signal through a second line.

18. The method as claimed in claim 17, wherein the operation (a2) generates the additional data, which represents a time period, a pulse width, and a polarity of a horizontal sync and the vertical sync, respectively, by numerical values.

19. The method as claimed in claim 18, wherein the operation (a2) counts the number of a plurality of dot clock signals of the horizontal sync to generate the counted number as the additional data.

20. The method as claimed in claim 18, wherein the operation (a2) represents a start location of the digital image signal by numerical values to determine an effective interval of the digital image signal and generates the numerical start location as the additional data.

21. The method as claimed in claim 17, wherein the first line comprises a display data channel (DDC) line, and the second line comprises an image line.

22. The method as claimed in claim 16, wherein the operation (b) comprises:
(b1) restoring the additional image information on the basis of the received additional data;
(b2) converting the received image signal into a digital image signal on the basis of the restored additional image information; and
(b3) scaling and displaying the converted digital image signal to a signal suitable for a predetermined resolution.

23. The method as claimed in claim 22, wherein the operation (b1) restores a horizontal sync and a vertical sync of the digital image signal, a plurality of dot clock signals of the horizontal sync, and a data enable signal on the basis of the additional data to restore the additional image information.

24. The method as claimed in claim 23, wherein the operation (b2) samples the analogue image signal using the restored dot clock signal, and synchronizes the analogue signal with the restored horizontal sync and vertical sync using the restored data enable signal to simultaneously convert the analogue image signal into the digital image signal.

25. The method as claimed in claim 23, wherein the additional data comprises a time period, a pulse width, and a polarity of the horizontal sync and the vertical sync, respectively, the number of dot clock signal of the horizontal sync, and a start location of the digital image signal to restore the data enable signal.

26. The method as claimed in claim 17, wherein the analogue image signal comprises a RGB image signal, and the signal source comprises a graphic module to represent the additional image signal on a digital image signal by numerical values and convert the digital image signal into an analogue image signal for outputting.

27. The method as claimed in claim 26, wherein the graphic module is installed in an external device according to a DDC standard.

28. A method of processing an image signal in a display device comprising the steps of:
receiving the image signal and an additional data signal which includes representation of numerical values;
restoring the additional data signal into an additional image information signal; and
forming the image signal incorporating a predetermined timing in accordance with the restored additional image information.

29. The method according to claim 28, wherein the additional data signal represents a predetermined characteristic needed to display the image signal.

30. The method according to claim 29, wherein the predetermined characteristic includes at least one of time period, the pulse width, and the polarity of the horizontal sync and the vertical sync , the number of dot clock signal D clock, and the start location t of the image signal.

31. The method according to claim 30, wherein the additional image information signal includes at least one of horizontal sync, the vertical sync, the dot clock signal, and the data enable signal.

32. The method according to claim 31, wherein the display device is capable of two-way communication with a source of the image signal and the additional data signal.

33. The method according to claim 32, wherein the two-way communication is implemented using the DDC standard.

34. The method according to claim 33, wherein the image signal is an analog signal.

35. The method according to claim 34, further comprising the step of scaling the formed image signal.

36. The method according to claim 35, further comprising the step of displaying the scaled image.

37. A method of processing an image signal comprising the steps of:
generating or receiving an image signal and an additional image information signal;
analyzing the additional image information signal to generate additional data signal representing at least one numerical value; and
outputting image signal and the additional data signal to a display device.

38. The method according to claim 37, wherein the additional data signal represents a predetermined characteristic needed to display the image signal.

39. The method according to claim 38, wherein the predetermined characteristic includes at least one of time period, the pulse width, and the polarity of the horizontal sync and the vertical sync , the number of dot clock signal D clock, and the start location t of the image signal.

40. The method according to claim 39, wherein the additional image information signal includes at least one of a horizontal sync , a vertical sync, and a dot clock signal.

41. The method according to claim 40, wherein the display device is capable of two-way communication with a source of the image signal and the additional data signal.

42. The method according to claim 41, wherein the two-way communication is implemented using the DDC standard.

43. The method according to claim 42, wherein the outputted image signal is an analog signal.

44. The method according to claim 43, further comprising the step of scaling the formed image signal.
